# EUROPÄISCHE PATENTSCHRIFT

(11) **EP 1 157 086 B1**
(45) Veröffentlichungstag und Bekanntmachung des Hinweises auf die Patenterteilung: **26.10.2005**
(21) Anmeldenummer: 00914080.7
(22) Anmeldetag: 10.02.2000
(51) Int. Cl.: C10L 1/18, C08G 65/26

(54) **POLYALKENALKOHOL-POLYALKOXYLATE UND DEREN VERWENDUNG IN KRAFT- UND SCHMIERSTOFFEN**
POLYALKENEALCOHOL-POLYALKOXYLATES AND THEIR USE IN FUELS AND LUBRICANTS
POLYALCOXYLATES DE POLYALCENEALCOOL ET LEUR UTILISATION DANS DES CARBURANTS ET DES LUBRIFIANTS

(30) Priorität: 25.02.1999 DE 19908262
(43) Veröffentlichungstag der Anmeldung: 28.11.2001
(73) Patentinhaber: BASF Aktiengesellschaft, 67056 Ludwigshafen (DE)
(72) Erfinder: OPPENLÄNDER, Knut, D-67061 Ludwigshafen (DE); GÜNTHER, Wolfgang, D-67582 Mettenheim (DE); RATH, Hans, Peter, D-67269 Grünstadt (DE); TRÖTSCH-SCHALLER, Irene, D-67281 Bissersheim (DE)
(86) Internationale Anmeldenummer: PCT/EP2000/001071
(87) Internationale Veröffentlichungsnummer: WO 2000/050543

(56) Entgegenhaltungen:
- EP-A- 0 277 345
- WO-A-00/02978
- GB-A- 1 097 696
- US-A- 4 877 416

## Beschreibung

Die vorliegende Erfindung betrifft spezielle Polyalkenalkohol-Polyalkoxylate, deren Verwendung als Trägeröle für Detergentien und Dispergatoren in Kraft- und Schmierstoffzusammensetzungen sowie Kraft- und Schmierstoffadditiv-Konzentrate und Kraft- und Schmierstoffzusammensetzungen selbst, welche diese Polyalkenalkohol-Polyalkoxylate enthalten.

Vergaser und Einlaßsysteme von Ottomotoren, aber auch Einspritzsysteme für die Kraftstoffdosierung, werden in zunehmendem Maße durch Verunreinigungen belastet, die durch Staubteilchen aus der Luft, unverbrannte Kohlenwasserstoffreste aus dem Brennraum und die in den Vergaser geleiteten Kurbelwellengehäuseentlüftungsgase verursacht werden.

Zur Vermeidung dieser Nachteile werden dem Kraftstoff Additive ("Detergentien") zur Reinhaltung von Ventilen und Vergaser bzw. Einspritzsystemen beigegeben. Derartige Detergentien gelangen im allgemeinen in Kombination mit einem oder mehreren Trägerölen zur Anwendung. Die Trägeröle üben eine zusätzliche "Waschfunktion" aus, unterstützen und fördern oft die Detergentien in ihrer reinigenden und reinerhaltenden Wirkung und können so zur Reduzierung der benötigten Menge an Detergentien beitragen. Als Trägeröle werden üblicherweise viskose, hochsiedende und insbesondere thermostabile Flüssigkeiten verwendet. Sie überziehen die heißen Metalloberflächen, z. B. die Einlaßventile, mit einem dünnen Flüssigkeitsfilm und verhindern oder verzögern dadurch die Bildung und Ablagerung von Zersetzungsprodukten an den Metalloberflächen.

Häufig verwendete Trägeröle sind beispielsweise hochsiedende raffinierte Mineralölfraktionen, aber auch synthetische Flüssigkeiten wie öllösliche Addukte von Alkylenoxiden an Alkohole. In der EP-A 277 345 werden Addukte von Ethylenoxid, Propylenoxid und/oder Butylenoxid an Polybutyl- oder Polyisobutenalkohole als Trägeröle in Kraft- oder Schmierstoffzusammensetzungen beschrieben, wobei pro Mol Alkohol zwischen 1 und 200 solcher Alkylenoxid-Einheiten angelagert werden können, jedoch das Molgewicht des Polyisobutens nicht überschritten werden sollte.

Die aus dem Stand der Technik bekannten Trägeröle sind jedoch häufig nur begrenzt mit anderen Additiven verträglich, so daß es zu einer Entmischung kommen kann. Auch verursacht die meist hohe Viskosität dieser Trägeröle oft Formulierungsprobleme. Insbesondere sind sie noch nicht in der Lage, den unerwünschten Effekt des "Ventilsteckens" restlos zu beseitigen. Unter "Ventilstecken" versteht man den vollständigen Kompressionsverlust auf einem oder mehreren Zylindern des Verbrennungsmotors, wenn - verursacht durch Polymerablagerungen am Ventilschaft - die Federkräfte nicht mehr ausreichen, die Ventile ordnungsgemäß zu schließen.

In GB-A-1 097 696 sind Polyalkoxylate beschrieben.

Aufgabe der vorliegenden Erfindung war es daher, Trägeröle für Detergentien und Dispergatoren in Kraft- und Schmierstoffzusammensetzungen bereitzustellen, die die geschilderten Probleme des Standes der Technik nicht mehr aufweisen. Insbesondere sollten diese Trägeröle möglichst eine zusätzliche Wirksamkeit als Detergentien aufweisen.

Demgemäß wurden Polyalkenalkohol-Polyalkoxylate der allgemeinen Formel I

R-(CH₂)ₙ-(O-A)ₘ-OH (I)

in der
- R: für einen von Isobuten und bis zu 20 Gew.% n-Buten abgeleiteten Polyalkenrest mit einem zahlengemittelten Molekulargewicht von 400 bis 800 steht,
- A: 1,2-Propylen und/oder 1,2-Butylen bezeichnet,
- m: eine Zahl bis 45 bedeutet mit der Maßgabe, daß der Sauerstoff im Oxalkylatrest -A-(O-A)ₘ₋₁-OH mindestens 16,5 Gew.-% des zahlengemittelten Molekulargewichts des Gesamtmoleküls der Verbindungen I ausmacht, und
- n: die Zahl 0 oder 1 bezeichnet,
gefunden.

Das dem Kohlenwasserstoffrest R zugrundeliegende Polyalken ist durch Oligo- oder Polymerisation dieser Alkene erhältlich, wobei die Oligo- bzw. Polymerisation in der Regel (beispielsweise durch kationische oder koordinative Oligo- bzw. Polymerisation) so geführt wird, daß der Kettenabbruch zu einer Doppelbindung führt, welche weiter zum entsprechenden Polyalkenalkohol funktionalisiert werden kann.

R steht für einen von Isobuten und bis zu 20 Gew.-% n-Buten abgeleiteten Polybutyl- oder Polyisobutylrest mit einem zahlengmittelten Molekulargewicht (M_{N}) von 400 bis 800.

Der Rest R kann vorzugsweise auf hochreaktivem Polyisobuten (mit Doppelbindungen überwiegend in der α-Position) basieren, welches - wie in der EP-A 277 345 beschrieben - durch Hydroformylierung in den entsprechenden Alkohol R-CH₂-OH (n = 1) umgewandelt werden kann. Im Falle n = 0 geht man bei der Herstellung entsprechender Polybuten- oder Polyisobutenalkohole üblicherweise von Polybutenen oder Polyisobutenen mit Doppelbindungen, welche sich überwiegend weiter innen in der Polymerkette (beispielsweise in der β-und γ-Position) befinden, aus; diese werden dann üblicherweise entweder durch Ozonolyse und nachfolgende Reduktion oder durch Epoxidierung und nachfolgende Reduktion oder durch Hydroborierung und nachfolgende Hydrolyse oder durch Halogenierung mit Chlor oder Brom und nachfolgende alkalische Hydrolyse in die Poly(iso)butenalkohole umgewandelt.

Die Untergrenze für den Alkoxylierungsgrad m wird durch die Maßgabe, daß der Sauerstoff im Oxalkylatrest -A-(O-A)ₘ₋₁-OH mindestens 16,5 Gew.-% des zahlengemittelten Molekulargewichts der Verbindungen I ausmacht, festgelegt. Die Obergrenze für m hängt von der Molmasse dieses Polyalkenalkohols ab. Typischerweise liegt diese Obergrenze jedoch bei 45, vor allem bei 35 Alkylenoxid-Einheiten.

Die Zahl m kann eine ganze Zahl für den Fall, daß nur eine einzige Molekülsorte der Verbindung I vorliegt, oder eine gebrochene Zahl für den Fall, daß eine Mischung verschiedener (dann üblicherweise homologer) Molekülsorten an I vorliegt, sein.

Vorzugsweise macht der Sauerstoff im Oxalkylatrest -A-(O-A)ₘ₋₁-OH mindestens 17,5 Gew.-%, vor allem 18,5 Gew.-%, des zahlengemittelten Molekulargewichtes des Gesamtmoleküls der Verbindungen I aus.

In einer bevorzugten Ausführungsform ist die Molmasse des Oxalkylatrestes -A-(O-A)ₘ₋₁-OH größer als die Molmasse des zugrundeliegenden Polyalkenalkohols R-(CH₂)ₙ-OH. Die Molmasse des Oxalkylatrestes -A-(O-A)ₘ₋₁-OH beträgt insbesondere das 1,5 bis 5fache, vor allem das 2 bis 4fache, der Molmasse des zugrundeliegenden Polyalkenalkohols R-(CH₂)ₙ-OH. Die Molmassenberechnungen beziehen sich auf die zahlengemittelten Molekulargewichte.

Die erfindungsgemäßen Polyalkenalkohol-Polyalkoxylate I lassen sich nach üblichen Methoden herstellen, beispielsweise durch Umsetzung der zugrundeliegenden Polyalkenalkohole R-(CH₂)ₙ-OH mit der entsprechenden Menge an Alkylenoxid in Gegenwart von geeigneten Katalysatoren wie Kaliumhydroxid, vorzugsweise in einer Menge von 0,01 bis 1 Gew.-%, insbesondere 0,05 bis 0,5 Gew.-% Kaliumhydroxid, bezogen auf die Menge des zu erwartenden Umsetzungsproduktes. Typische Umsetzungstemperaturen liegen bei 70 bis 200°C, insbesondere bei 100 bis 160°C. Der Druck beträgt üblicherweise 3 bis 30 bar. Das Umsetzungsprodukt kann wie üblich durch Ausgasen flüchtiger Bestandteile im Vakuum und gegebenenfalls durch Filtration aufgearbeitet werden.

Die erfindungsgemäßen Polyalkenalkohol-Polyalkoxylate I eignen sich in hervorragender Weise als Trägeröle für Detergentien und Dispergatoren in Kraft- und Schmierstoffzusammensetzungen. Besonders bevorzugt werden sie in Kraftstoffzusammensetzungen, insbesondere in Ottokraftstoffzusammensetzungen, eingesetzt.

Übliche Detergentien sind beispielsweise:
(a) Polyisobutenamine, welche gemäß der EP-A 244 616 durch Hydroformylierung von hochreaktivem Polyisobuten und anschließende reduktive Aminierung mit Ammoniak, Monoaminen oder Polyaminen wie Dimethylenaminopropylamin, Ethylendiamin, Diethylentriamin, Triethylentetramin oder Tetraethylenpentamin erhältlich sind,
(b) Poly(iso)butenamine, welche durch Chlorierung von Polybutenen oder Polyisobutenen mit Doppelbindungen überwiegend in der β-und γ-Position und anschließende Aminierung mit Ammoniak, Monoaminen oder den oben genannten Polyaminen erhältlich sind,
(c) Poly(iso)butenamine, welche durch Oxidation von Doppelbindungen in Poly(iso)butenen mit Luft oder Ozon zu Carbonyl- oder Carboxylverbindungen und anschließende Aminierung unter reduzierenden (hydrierenden) Bedingungen erhältlich sind,
(d) Polyisobutenamine, welche gemäß der DE-A 196 20 262 aus Polyisobutenepoxiden durch Umsetzung mit Aminen und nachfolgende Dehydratisierung und Reduktion der Aminoalkohole erhältlich sind,
(e) gegebenenfalls Hydroxylgruppen enthaltende Polyisobutenamine, welche gemäß der WO-A 97/03946 durch Umsetzung von Polyisobutenen mit einem mittleren Polymerisationsgrad P = 5 bis 100 - mit Stickoxiden oder Gemischen aus Stickoxiden und Sauerstoff und anschließende Hydrierung dieser Umsetzungsprodukte erhältlich sind,
(f) Hydroxylgruppen enthaltende Polyisobutenamine, welche gemäß der EP-A 476 485 durch Umsetzung von Polyisobutenepoxiden mit Ammoniak, Monoaminen oder den oben genannten Polyaminen erhältlich sind,
(g) Polyetheramine, welche durch Umsetzung von C₂- bis C₃₀-Alkanolen, C₆- bis C₃₀-Alkandiolen, Mono- oder Di-C₂- bis C₃₀-Alkylaminen, C₁- bis C₃₀-Alkylcyclohexanolen oder C₁- bis C₃₀-Alkylphenolen mit 1 bis 30 mol Ethylenoxid und/oder Propylenoxid und/oder Butylenoxid pro Hydroxyl- bzw. Aminogruppe und anschließende reduktive Aminierung mit Ammoniak, Monoaminen oder den oben genannten Polyaminen erhältlich sind, auch Polyetheramine mit Carbamat-Struktur sind verwendbar,
(h) "Polyisobuten-Mannichbasen", welche gemäß EP-A 831 141 durch Umsetzung von polyisobutensubstituierten Phenolen mit Aldehyden und Monoaminen oder den oben genannten Polyaminen erhältlich sind.

Übliche Dispergatoren sind beispielsweise Imide, Amide, Ester und Ammonium- und Alkalimetallsalze von Polyisobutenbernsteinsäureanhydriden, welche insbesondere Einsatz in Schmierölen finden, teilweise jedoch auch als Detergentien in Kraftstoffzusammensetzungen verwendet werden.

Als weitere Ottokraftstoffadditive können solche mit ventilsitzverschleißhemmender Wirkung zusammen mit den Verbindungen I eingesetzt werden; hierbei sind beispielsweise Carboxylgruppen oder deren Alkalimetall- oder Erdalkalimetallsalze enthaltende Additive wie beispielsweise Copolymere aus C₂- C₄₀-Olefinen mit Maleinsäureanhydrid mit einer Gesamt-Molmasse von 500 bis 20000, deren Carboxylgruppen ganz oder teilweise zu den Alkalimetall- oder Erdalkalimetallsalzen und ein verbleibender Rest der Carboxylgruppen mit Alkoholen oder Aminen umgesetzt sind, wie sie in der EP-A 307 815 beschrieben sind, oder Sulfonsäuregruppen oder deren Alkalimetall- oder Erdalkalimetallsalze enthaltende Additive wie beispielsweise Alkalimetall- oder Erdalkalimetallsalze von Sulfobernsteinsäurealkylestern, wie sie in der EP-A 639 632 beschrieben sind, von Interesse. Solche ventilsitzverschleißhemmenden Ottokraftstoffadditive können mit Vorteil auch im Kombination mit üblichen Kraftstoffdetergenzien wie Poly(iso)butenaminen oder Polyetheraminen, wie in der WO-A 87/01126 beschrieben, eingesetzt werden.

Gegenstand der vorliegenden Erfindung sind auch Kraft- und Schmierstoffadditiv-Konzentrate, welche die erfindungsgemäßen Polyalkenalkohol-Polyalkoxylate I in Mengen von 0,1 bis 80, insbesondere 0.5 bis 60 Gew.-%, bezogen auf die Gesamtmenge der Konzentrate, enthalten. Diese Konzentrate enthalten üblicherweise auch die oben aufgeführten Detergentien oder Dispergatoren sowie weitere hierfür übliche Komponenten und Hilfsmittel sowie Lösungs- oder Verdünnungsmittel, z.B. aliphatische und aromatische Kohlenwasserstoffe wie Solvent Naphtha.

Weitere übliche Komponenten und Hilfsmittel sind Korrosionsinhibitoren, beispielsweise auf Basis von zur Filmbildung neigenden Ammoniumsalzen organischer Carbonsäuren oder von heterocyclischen Aromaten bei Buntmetallkorrosionsschutz, Antioxidantien oder Stabilisatoren, beispielsweise auf Basis von Aminen wie p-Phenylendiamin, Dicyclohexylamin oder Derivaten hiervon oder von Phenolen wie 2,4-Di-tert.-butylphenol oder 3,5-Di-tert.-butyl-4-hydroxyphenylpropionsäure, Demulgatoren, Antistatikmittel, Metallocene wie Ferrocen oder Methylcyclopentadienylmangantricarbonyl, Schmierfähigkeitsverbesserer (Lubricity-Additive) wie bestimmte Fettsäuren, Alkenylbernsteinsäureester, Bis(hydroxyalkyl)fettamine, Hydroxyacetamide oder Ricinusöl sowie Farbstoffe (Marker). Manchmal werden auch Amine zur Absenkung des pH-Wertes des Kraftstoffes zugesetzt.

Als weitere übliche Komponenten und Additive sollen auch weitere übliche Trägeröle genannt werden, beispielsweise mineralische Trägeröle (Grundöle), insbesondere solche der Viskositätsklasse "Solvent Neutral (SN) 500 bis 2000", und synthetische Trägeröle auf Basis von Olefinpolymerisaten mit M_{N} = 400 bis 1800, vor allem auf Polybuten- oder Polyisobuten-Basis (hydriert oder nicht hydriert), von Polyalphaolefinen oder Polyinternalolefinen.

Gegenstand der vorliegenden Erfindung sind weiterhin Kraft- und Schmierstoffzusammensetzungen, insbesondere Kraftstoffzusammensetzungen, vor allem Ottokraftstoffzusammensetzungen, welche die erfindungsgemäßen Polyalkenalkohol-Polyalkoxylate I in wirksamen Mengen enthalten. Unter wirksamen Mengen sind in der Regel bei Kraftstoffzusammensetzungen 10 bis 5000 Gew.-ppm, insbesondere 50 bis 2000 Gew.-ppm, bei Schmierstoffzusammensetzungen 0,1 bis 10 Gew.-%, ins-besondere 0,5 bis 5 Gew.-%, jeweils bezogen auf die Gesamtmenge der Zusammensetzung, zu verstehen. Die Kraft- und Schmierstoffzusammensetzungen enthalten üblicherweise neben den erfindungsgemäßen Verbindungen I als Trägeröle die oben aufgeführten Detergentien bzw. Dispergatoren sowie die genannten weiteren hierfür üblichen Komponenten und Hilfsmittel sowie Lösungs- oder Verdünnungsmittel.

Für die erfindungsgemäßen Kraftstoffzusammensetzungen kommen weiterhin insbesondere Kombinationen eines Ottokraftstoffes mit einer Mischung aus Polyalkenalkohol-Polyalkoxylaten I, Polyisobutenamin-Detergentien, insbesondere solche der vorgenannten Gruppen (a), (b), (c) oder (d), und Korrosionsinhibitoren und/oder Schmierfähigkeitsverbesserern auf Basis von Carbonsäuren oder Fettsäuren, welche als monomere und/oder dimere Species vorliegen können, in Betracht.

Die erfindungsgemäßen Polyalkenalkohol-Polyalkoxylate I sind in der Lage, das unerwünschte "Ventilstecken" insbesondere bei Ottomotoren wirksam zu vermeiden. Sie sind weiterhin in der Regel mit den anderen Additiven ausreichend verträglich, so daß keine Entmischungseffekte auftreten. Auch verursacht ihr Viskositätsverhalten keine Formulierungsprobleme.

Die in erster Linie als Trägeröle verwendbaren Verbindungen I zeigen ebenfalls Wirkung als Detergentien. Sie leisten somit auch bei geringer Dosierung einen hohen Beitrag zur Gesamt-Performance eines Additivpaketes hinsichtlich der Detergenzwirkung und ermöglichen deshalb zumindest eine teilweise Einsparung der üblichen teureren Detergentien.

### Beispiele

### Herstellung von Addukten von Propylenoxid oder 1,2-Butylenoxid an Polyisobutenalkohol (M_{N} = 550)

Ein gemäß der EP-A 277 345 aus hochreaktivem Polyisobuten durch Hydroformylierung hergestellter Polyisobutenalkohol mit einem zahlengemittelten Molekulargewicht M_{N} = 550 wurde unter üblichen Reaktionsbedingungen (Kaliumhydroxid-Katalyse, 135°C Umsetzungstemperatur) mit x mol Propylenoxid ("PO") bzw. 1,2-Butylenoxid ("BO") zu den in der unten stehenden Tabelle charakterisierten Addukten umgesetzt.

### Anwendungstechnische Untersuchungen

In einem Mercedes Benz M 102 E-Motor wurden gemäß CEC-Methode F-05-A-93 Versuche zur Einlaßventilsauberkeit durchgeführt. Weiterhin wurden in einem VW Wasserboxer-Motor gemäß CEC-Methode F-16-T-96 Ventilklebetests ("No Harm" Tests) bei der dreifachen der für die Einlaßventilreinhaltung erforderlichen Dosierhöhe durchgeführt. Für die Motorentests wurde ein marktüblicher Eurosuper Grundkraftstoff gemäß EN 228 eingesetzt. Bei den hier getesteten Ottokraftstoffadditiv-Konzentraten handelt es sich es sich um Additivpakete, welche als Detergenz 60 Gew.-% eines üblichen Polyisobutenamins gemäß EP-A 244 616 sowie 20 Gew.-% der obigen Addukte von PO bzw. BO an Polyisobutenalkohol (M_{N} = 550) enthielten. Die Dosierung für die Konzentrate betrug bei den Tests für die Einlaßventilsauberkeit jeweils 600 mg/kg, bei den Ventilklebetests jeweils 1800 mg/kg.

**Tabelle**

| Beispiel Nr. | Menge x an Alkoxylenoxid | Molmasse Oxalkylatrest | Molmassenverhältnis Oxalkylatrest zu Alkohol | Sauerstoffanteil des Oxalkylatrestes |
|---|---|---|---|---|
| 1 erfindungsgemäß | 25 mol PO | 1450 | 2,6 : 1 | 20,0 Gew.-% |
| 2 erfindungsgemäß | 20 mol PO | 1160 | 2,1 : 1 | 18,7 Gew.-% |
| 3 zum Vergleich | 10 mol PO | 580 | 1,05 : 1 | 14,2 Gew.-% |
| 4 zum Vergleich | 10 mol BO | 720 | 1,3 : 1 | 12,6 Gew.-% |
| 5 zum Vergleich | 20 mol BO | 1440 | 2,6 : 1 | 16,1 Gew.-% |

| Beispiel Nr. | Einlaßventilablagerungen [mg/Ventil] | | | | | Ventilklebetest |
|---|---|---|---|---|---|---|
| | 1 | 2 | 3 | 4 | Mittelwert | |
| -ohne Additive | 283 | 132 | 232 | 290 | 234 | - |
| 1 erfindungsgemäß | 0 | 19 | 7 | 45 | 15 | bestanden |
| 2 erfindungsgemäß | - | - | - | - | - | bestanden |
| 3 zum Vergleich | 3 | 20 | 18 | 3 | 11 | nicht bestanden |
| 4 zum Vergleich | 1 | 4 | 12 | 14 | 8 | nicht bestanden |
| 5 zum Vergleich | 2 | 22 | 0 | 24 | 15 | nicht bestanden |

Wie aus der obigen Tabelle ersichtlich, zeigen alle getesteten Additivpakete eine vergleichbar gute Detergenzwirkung, jedoch sind nur die erfindungsgemäßen Additivpakete 1 und 2 in der Lage, das Ventilkleben oder Ventilstecken im VW Wasserboxer-Motor wirksam zu vermeiden.

## Patentansprüche

1. Polyalkenalkohol-Polyalkoxylate der allgemeinen Formel I
R-(CH₂)ₙ-(O-A)ₘ-OH (I)
in der
R für einen von Isobuten und bis zu 20 Gew.-% n-Buten abgeleiteten Polybutyl- oder Polyisobutylrest mit einem zahlengemittelten Molekulargewicht von 400 bis 850 steht,
A 1,2-Propylen und/oder 1,2-Butylen bezeichnet,
m eine Zahl bis 45 bedeutet mit der Maßgabe, daß der Sauerstoff im Oxalkylatrest -A-(O-A)ₘ₋₁-OH mindestens 16,5 Gew.-% des zahlengemittelten Molekulargewichts des Gesamtmoleküls der Verbindungen I ausmacht, und
n die Zahl 0 oder 1 bezeichnet.

2. Polyalkenalkohol-Polyalkoxylate I nach Anspruch 1, bei denen die Molmasse des Oxalkylatrestes -A-(O-A)ₘ₋₁-OH größer als die Molmasse des zugrundeliegenden Polyalkenalkohols R-(CH₂)ₙ-OH ist.

3. Polyalkenalkohol-Polyalkoxylate I nach Anspruch 1 oder 2, bei denen die Molmasse des Oxalkylatrestes -A-(O-A)ₘ₋₁-OH das 1,5 bis 5fache der Molmasse des zugrundeliegenden Polyalkenalkohols R-(CH₂)ₙ-OH beträgt.

4. Verfahren zur Herstellung von Polyalkenalkohol-Polyalkoxylaten der allgemeinen Formel I gemäß den Ansprüchen 1 bis 3, **dadurch gekennzeichnet, daß** man Polyalkenalkohole der Formel R- (CH₂)ₙ-OR, in der R und n die oben genannten Bedeutungen haben, mit der entsprechenden Menge an Alkylenoxid in Gegenwart von geeigneten Katalysatoren umsetzt.

5. Verfahren zur Herstellung von Polyalkenalkohol-Polyalkoxylaten I nach Anspruch 4, **dadurch gekennzeichnet, daß** man die Umsetzung in Gegenwart von 0,01 bis 1 Gew.-& Kaliumhydroxid, bezogen auf die Menge des zu erwartenden Umsetzungsproduktes, bei 70 bis 200°C und 3 bis 30 bar durchführt.

6. Verwendung von Polyalkenalkohol-Polyalkoxylaten I gemäß den Ansprüchen 1 bis 3 als Trägeröle für Detergentien und Dispergatoren in Kraft- und Schmierstoffzusammensetzungen.

7. Kraft- und Schmierstoffadditiv-Konzentrate, enthaltend Polyalkenalkohol-Polyalkoxylate I gemäß den Ansprüchen 1 bis 3 in Mengen von 0,1 bis 80 Gew.-%.

8. Kraft- und Schmierstoffzusammensetzungen, enthaltend in wirksamen Mengen Polyalkemalkohol-Polyalkoxylate I gemäß den Ansprüchen 1 bis 3.

## Claims

1. A polyalkene alcohol polyalkoxylate of the formula I
R-(CH₂)ₙ-(O-A)ₘ-OH (I)
where
R is a polybutyl or polyisobutyl radical derived from isobutene and up to 20% by weight of n-butene and having a number average molecular weight of from 400 to 850,
A is 1,2-propylene and/or 1,2-butylene,
m is a number up to 45, with the proviso that the oxygen in the oxyalkylate radical -A-(O-A)ₘ₋₁-OH accounts for at least 16.5% by weight of the number average molecular weight of the total molecule of the compounds I, and
n is 0 or 1.

2. A polyalkene alcohol polyalkoxylate I as claimed in claim 1, in which the molar mass of the oxyalkylate radical -A-(O-A)ₘ₋₁-OH is greater than the molar mass of the parent polyalkene alcohol R-(CH₂)ₙ-OH.

3. A polyalkene alcohol polyalkoxylate I as claimed in claim 1 or 2, in which the molar mass of the oxyalkylate radical -A-(O-A)ₘ₋₁-OH is 1.5 to 5 times the molar mass of the parent polyalkene alcohol R-(CH₂)ₙ-OH.

4. A process for the preparation of polyalkene alcohol polyalkoxylates of the formula I as claimed in any of claims 1 to 3, wherein polyalkene alcohols of the formula R-(CH₂)ₙ-OH, where R and n have the abovementioned meaning, are reacted with the corresponding amount of alkylene oxide in the presence of suitable catalysts.

5. A process for the preparation of polyalkene alcohol polyalkoxylates I as claimed in claim 4, wherein the reaction is carried out in the presence of from 0.01 to 1& [sic] by weight, based on the amount of the expected reaction product, of potassium hydroxide at from 70 to 200°C and from 3 to 30 bar.

6. The use of a polyalkene alcohol polyalkoxylate I as claimed in any of claims 1 to 3 as a carrier oil for detergents and dispersants in fuel and lubricant compositions.

7. A fuel additive concentrate or lubricant additive concentrate, containing a polyalkene alcohol polyalkoxylate I as claimed in any of claims 1 to 3 in an amount of from 0.1 to 80% by weight.

8. A fuel composition or lubricant composition, containing a polyalkene alcohol polyalkoxylate I as claimed in any of claims 1 to 3 in an effective amount.

## Revendications

1. Polyalcoxylates de polyalcènealcool de formule générale I :
R-(CH₂)ₙ-(O-A)ₘ-OH (I)
dans laquelle
R représente un radical polybutyle ou polyisobutyle dérivé d'isobutène et de jusqu'à 20% en poids de n-butène et présentant un poids moléculaire moyen en nombre de 400 à 850,
A représente du 1,2-propylène et/ou du 1,2-butylène,
m représente un nombre jusqu'à 45 à la condition que l'oxygène dans le radical oxalkylate -A-(O-A)ₘ₋₁-OH constitue au moins 16,5% en poids du poids moléculaire moyen en nombre de la molécule globale des composés I, et
n représente le nombre 0 ou 1.

2. Polyalcoxylates de polyalcènealcool I suivant la revendication 1, dans lesquels la masse molaire du radical oxalkylate -A-(O-A)ₘ₋₁-OH est plus grande que la masse molaire du polyalcènealcool de base R-(CH₂)ₙ-OH.

3. Polyalcoxylates de polyalcènealcool I suivant la revendication 1 ou 2, dans lesquels la masse molaire du radical oxalkylate -A-(O-A)ₘ₋₁-OH a 1,5 à 5 fois la masse molaire du polyalcènealcool de base R-(CH₂)ₙ-OH.

4. Procédé de préparation de polyalcoxylates de polyalcènealcool de formule générale I suivant les revendications 1 à 3, **caractérisé en ce qu'**on fait réagir des polyalcènealcools de la formule R-(CH₂)ₙ-OH, dans laquelle R et n ont les significations données ci-dessus, avec la quantité correspondante d'oxyde d'alkylène en présence de catalyseurs appropriés.

5. Procédé de préparation de polyalcoxylates de polyalcènealcool I suivant la revendication 4, **caractérisé en ce qu'**on effectue la réaction en présence de 0,01 à 1% en poids d'hydroxyde de potassium, par rapport à la quantité du produit réactionnel à attendre, à 70 jusqu'à 200°C et à 3 jusqu'à 30 bars.

6. Utilisation de polyalcoxylates de polyalcènealcool I suivant les revendications 1 à 3, comme huiles de support pour des détergents et des dispersants dans des compositions de carburant et de lubrifiant.

7. Concentrés d'additifs de carburant et de lubrifiant, contenant des polyalcoxylates de polyalcènealcool I suivant les revendications 1 à 3, en des quantités de 0,1 à 80% en poids.

8. Compositions de carburant et de lubrifiant, contenant en quantités efficaces des polyalcoxylates de polyalcènealcool I suivant les revendications 1 à 3.
